# EUROPEAN PATENT APPLICATION

(11) **EP 1 465 318 A2**
(43) Date of publication of application: **06.10.2004**
(21) Application number: 04004348.1
(22) Date of filing: 26.02.2004
(51) Int. Cl.: H02J 9/06

(54) **Uninterruptible power supply system**

(30) Priority: 31.03.2003 JP 2003095800
(71) Applicant: Fuji Electric Holdings Co., Ltd., Tokyo 141-0032 (JP)
(72) Inventor: Kobayashi, Nobuyuki, Shinagawa-ku Tokyo 141-0032 (JP); Tokuda, Hirokazu, Shinagawa-ku Tokyo 141-0032 (JP)
(74) Representative: Hoffmann, Eckart, Dipl.-Ing.

(57) **Abstract**

An uninterruptible power supply (UPS) system is provided which is adapted to prevent the output voltage from dropping due to an operation delay of a relay for isolating an AC power source side from the UPS system, and along with this, to avoid an unexpected current flowing between the AC power source side and the UPS system side. When a short circuit occurs, a parallel converter (2), connected in parallel to input terminals (11) connected to an AC power source (1), is made to operate so that the output voltage thereof becomes "0", and a series inverter (3), connected in series between an input relay (7) and one of output terminals (12), is made to carry out a compensating operation with a smoothing capacitor (4) taken as a power source so that the value of the applied voltage to the output terminals (12) becomes an output voltage command value Vout*. This makes the output voltage of the parallel converter (2) become "0" to produce no electric potential difference between the AC power source (1) side and the output side of the parallel converter (2). Therefore, no current flows between the AC power source (1) side and the parallel converter (2), and the value of the applied voltage to the output terminals (12) is continuously maintained at the output voltage command value Vout* by the series inverter (3).

## Description

The present invention relates to an uninterruptible power supply (UPS) system which is to carry out electric power supply to a load while making an AC power source voltage stabilized, and along with this, at a power failure of the AC power source, to carry out supply of electric power by using energy stored in an energy storing unit, and more particularly to an UPS system which is to prevent the supplied electric power from being lowered at switching from a normal operation to an operation at power failure.

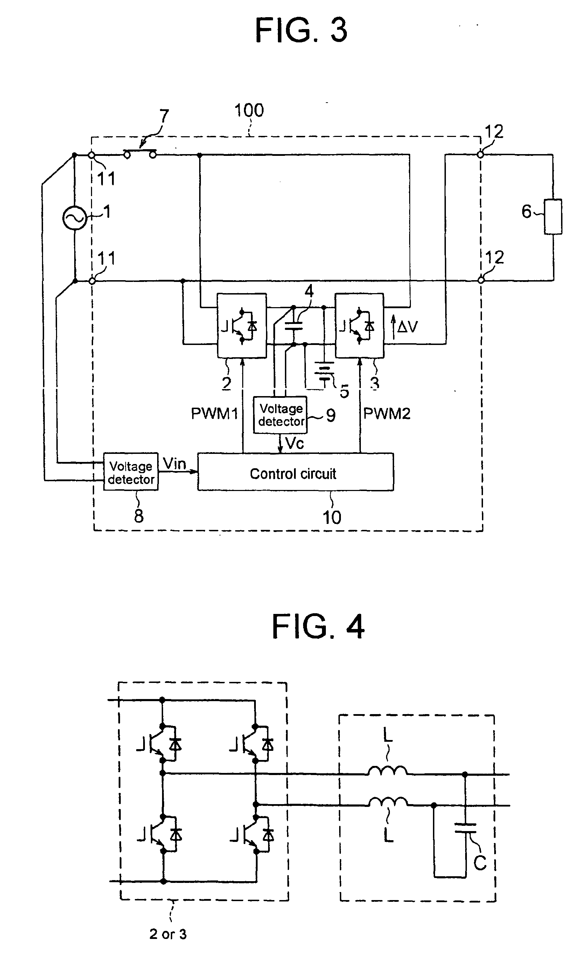

Conventionally, for this kind of UPS system, a number of systems have been proposed. For example, there is known one arranged as shown in Fig. 3.

Figure 3 shows an example of such an UPS system for a single phase circuit. As shown in Fig. 3, in an UPS system 100, between input terminals 11, to which an AC power source 1 is connected, and output terminals 12, to which a load 6 is connected, an input relay 7 is inserted. By bringing the input relay 7 to an open (interrupting) state, when an abnormality occurs in the AC power source 1, the AC power source 1 is isolated from the UPS system 100. Reference numeral 2 in the figure denotes a parallel converter that is connected in parallel to the input terminals 11 through the input relay 7 and that is capable of carrying out a rectifier operation and an inverter operation. Moreover, reference numeral 3 in the figure denotes a series inverter that is connected in series between the input relay 7 and one of the output terminals 12 to carry out an inverter operation. Between the parallel converter 2 and series converter 3, a smoothing capacitor 4 and an energy storing unit 5 such as a battery are connected in parallel thereto.

Moreover, the parallel converter 2 and series inverter 3 are controlled by a control circuit 10. In the control circuit 10, on the basis of an AC power source voltage Vin, supplied from the AC power source 1 and detected by a voltage detector 8, and a terminal voltage Vc of the smoothing capacitor 4 detected by a voltage detector 9, control is carried out so that the output voltage to the load 6 becomes a specified voltage.

The parallel converter 2 and series inverter 3 are, as shown in Fig. 4, for example, arranged with a full bridge circuit using semiconductor switches such as known transistors. The on-off operations of these semiconductor switches are, with respect to the parallel converter 2, carried out on the basis of a gate signal PWM 1 outputted from the control circuit 10. Moreover, with respect to the series inverter 3, the operations are carried out on the basis of a gate signal PWM 2. On the output side of the parallel converter 2 or the series inverter 3, as shown in Fig. 4, a filter is sometimes disposed which is constituted with reactors L and a capacitor C.

In the UPS system 100 thus arranged, when the AC voltage Vin of the AC power source 1 detected by the voltage detector 8 is within a permissible range, the input relay 7 is in a state of conduction, and the parallel converter 2 is operates to charge and discharge the smoothing capacitor 4 on the basis of the terminal voltage Vc of the smoothing capacitor 4 detected by the voltage detector 9 so that the voltage Vc becomes the specified voltage. This converts AC power of the AC power source 1 to DC power so that the terminal voltage Vc of the smoothing capacitor 4 is maintained at the specified voltage.

The series inverter 3 is operated so as to output a compensating voltage ΔV for compensating for excess or deficiency in the voltage from AC power source 1 so that the voltage applied to the load 6 becomes the specified voltage. This converts the DC power of the smoothing capacitor 4 to AC power with the applied voltage to the load 6 maintained at the specified voltage.

When the AC voltage Vin falls out of the permissible range, i.e., an abnormality has occurred on the AC power source side, the input relay 7 is switched into the open state and the operation of the series inverter 3 is stopped. Along with this, the parallel converter 2 is made to perform an inverter operation to convert the DC power of the energy storing unit 5 to a specified AC power, which is supplied to the load 6. This makes the applied voltage to the load 6 to be maintained at the specified voltage even when the AC power source side is disconnected (see, for example, JP-A-2002-199620).
In the conventional UPS system, however, when the input relay 7 is formed with mechanical contacts, an operation delay of several milliseconds to ten and some odd milliseconds is caused in the input relay 7 from reception of an on-off command to an actual operation.

Therefore, during the time from the occurrence of the power failure to the disconnection of the AC power source 1 from the UPS system 100, during which the power failure is detected and the input relay 7 is controlled to be actually brought to the open state, the power source 1 remains connected. Consider the case in which the power source 1 stays connected with the operation of the series inverter 3 stopped and the parallel converter 2 made to carry out an inverter operation in response to detection of power failure. In this case, when the AC voltage Vin falls out of the permissible range by occurrence of a short circuit on the alternating-power source side, for example, the alternating-power source 1 in the short circuit state brings the parallel converter 2, being connected to the power source in parallel, also into the short circuit state. Therefore, there is a problem of making it impossible to maintain the voltage applied to the load 6 at the specified voltage.

Moreover, an operation of the parallel converter 2 for maintaining the specified voltage produces an electric potential difference between the power source voltage after the power failure and the output voltage of the parallel converter 2. This, in some cases, causes a current to flow between the AC power source 1 and the parallel converter 2. In particular, if a short circuit failure occurs with the AC power source 1, an unexpected short circuit current may flow to cause in some cases a break-down of the whole UPS system.

Furthermore, when the AC power source side is brought into an open circuit state by the power failure, there is also a problem in which, although the AC power source side is essentially in a state without power source, a voltage is supplied thereto from the UPS system 100.

An object of the invention is to overcome these problems of the conventional system and to provide an UPS system that can avoid a drop in the output voltage when the AC power source side is disconnected due to a drop in the AC power source voltage.

This object is achieved by an UPS system as claimed in claim 1 and claim 2, respectively.

In the embodiment according to claim 1, when the supplied AC power is sound, i.e., is within a given range, the series power converting unit operates for compensating the supplied AC power with the electricity storing unit taken as an electric power source so that the value of the AC power output at the output end becomes a specified output value. Moreover, the parallel power converting unit carries out charging and discharging of the electricity storing unit so that the amount of stored electricity in the electricity storing unit becomes a specified amount. Therefore, when the supplied AC power is sound, the value of the AC power output at the output end is maintained at the specified output value.

When a short circuit failure, for example, is caused on the AC power supplying side and this is detected by the power failure detecting unit, the AC power supplying side is isolated from the UPS system side by the disconnecting unit. During the time from occurrence of the short circuit through the operation of the disconnecting unit in response thereto to complete the isolation of the AC power supplying side, the AC current side of the parallel power converting unit is also brought into the short circuit state. However, at the time when the short circuit is detected, the series power converting unit operates for outputting the whole voltage of the AC output of the UPS system at the output end so that the value of the AC power at the output end becomes the specified value of output. Therefore, even in the case in which operation delay is caused until the completion of isolation of the AC power supplying side, the value of the AC power at the output end is maintained at the specified value.

In the embodiment according to claim 2, when the supplied AC power is sound, the series power converting unit operates for compensating the supplied AC power with the electricity storing unit taken as an electric power source so that the value of an AC power output at the output end becomes a specified output value. Moreover, the parallel power converting unit carries out charging and discharging of the electricity storing unit so that the amount of stored electricity in the electricity storing unit becomes a specified amount. Therefore, when the supplied AC power is sound, the value of the AC power output at the output end is maintained at the specified output value.

When a power failure is caused on the AC power supplying side and this is detected by the power failure detecting unit, the AC power supplying side is isolated from the UPS system side by the disconnecting unit. During the time from occurrence of the power failure through the operation of the cutting out unit in response thereto to complete the isolation of the AC power supplying side, a residual voltage of the AC power appears on the output end side of the cutting out unit.

However, at the time when the power failure is detected, the parallel power converting unit operates so that the voltage on the parallel connected point side becomes the supplied AC power voltage detected by the AC voltage detecting unit. Thus, no electric potential difference is produced between the AC power supplying side and the parallel connected point side. Therefore, no unexpected current flows due to the power failure. While, the series power converting unit, at the time when the power failure is detected, carries out the operation for compensating the AC output of the parallel power converting unit so that the value of the AC output at the output end becomes the specified output value.

Therefore, even in the case in which operation delay is caused until the completion of isolation of the AC power supplying side, the value of the AC power at the output end is maintained at the specified value. Moreover, no unexpected current flows in the UPS system.

Preferred embodiments of the invention will be explained in detail below with reference to the drawings, in which:
- Fig. 1: shows a schematic block diagram showing a control circuit of an UPS system according to a first embodiment of the invention;
- Fig. 2: shows a schematic block diagram showing a control circuit of an UPS system according to a second embodiment of the invention;
- Fig. 3: shows a schematic block diagram showing an UPS system; and
- Fig. 4: shows an example of circuit arrangement of the parallel converter section or the series inverter section in Fig. 3.

### First Embodiment

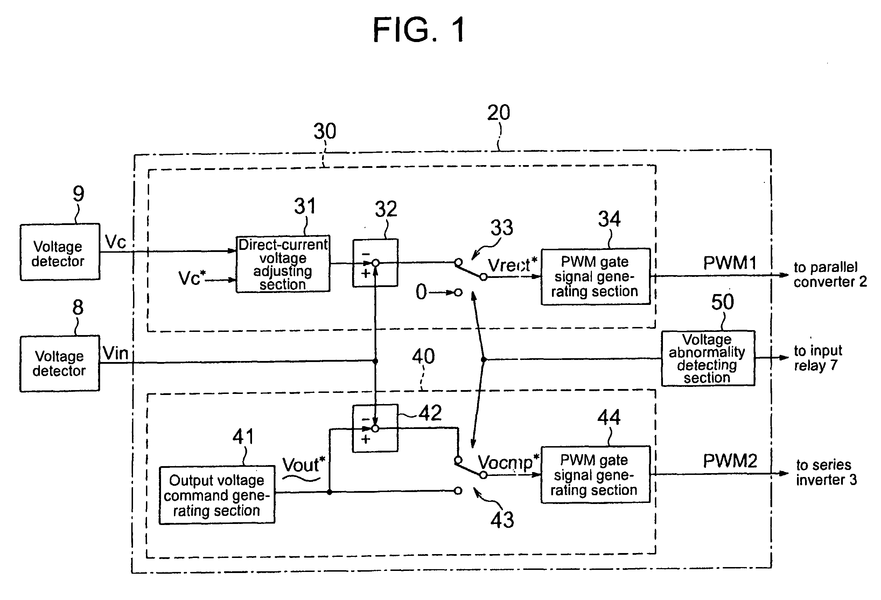

A first embodiment of the invention will be explained with reference to Fig. 1. Fig. 1 shows a control circuit 20 for use in the UPS system 100 of Fig. 3 in substitution for the control circuit 10.

As shown in Fig. 1, the control circuit 20 is made up of a parallel converter control section 30 for controlling the parallel converter 2, a series inverter control section 40 for controlling the series inverter 3, and a voltage abnormality detecting section 50.

The parallel converter control section 30 is made up of a DC voltage adjusting section 31 that carries out an adjusting arithmetic operation so that the value of the terminal voltage Vc of the smoothing capacitor 4 detected by the voltage detector 9 and a specified value Vc* set beforehand equal to each other, a subtracter 32 that subtracts the value of an adjusting voltage calculated at the DC voltage adjusting section 31 from the value of the AC voltage Vin detected by the voltage detector 8, a changeover switch 33 that selects either the subtracted value calculated at the subtracter 32 or a specified value "0" to provide it as an output voltage command value Vrect* for the parallel converter 2, and a PWM pulse generating section 34 that carries out PWM control on the basis of the output voltage command value Vrect* set by the changeover switch to produce the gate signal PWM 1 for making the semiconductor switch forming the parallel converter 2 perform on-off operation.

The series inverter control section 40 is made up of an output voltage command generating section 41 that sets an output voltage command value Vout* of the UPS system 100 according to the AC voltage to be applied to the load 6, a subtracter 42 that subtracts the value of the AC voltage Vin detected by the voltage detector 8 from the output voltage command value Vout* set at the output voltage command generating section 41, a changeover switch 43 that selects either the subtracted value calculated at the subtracter 42 or the output voltage command value Vout* from the output voltage command generating section 41 as a compensating voltage command value Vocmp*, and a PWM pulse generating section 44 that carries out PWM control on the basis of the compensating voltage command value Vocmp* selected by the changeover switch 43 to produce the gate signal PWM 2 for making the semiconductor switches forming the series inverter 3 perform on-off operation.

The voltage abnormality detecting section 50 decides whether or not the AC voltage Vin detected by the voltage detector 8 is within a permissible range set beforehand in which the AC voltage Vin can be regarded as being normal. When the voltage is decided as being within the permissible range, the input relay 7 is controlled to be in the state of conduction. Along with this, the changeover switch 33 in the parallel converter control section 30 is controlled so as to select the output of the subtracter 32. Furthermore, the changeover switch 43 in the series inverter control section 40 is controlled so as to select the output of the subtracter 42.

When the AC voltage Vin is decided as being not within the permissible range, the input relay 7 is controlled to be in the open state. Along with this, the changeover switch 33 in the parallel converter control section 30 is controlled so as to select the specified value "0". Furthermore, the changeover switch 43 in the series inverter control section 40 is switched so as to select the output voltage command value Vout* from the output voltage command generating section 41.

In the following, the operation of the first embodiment will be explained.

When the AC voltage Vin is within the permissible range, the input relay 7 is controlled to be in the state of conduction. Along with this, the changeover switches 33 and 43 are controlled so that the output of the subtracter 32 is selected by the changeover switch 33, and the output of the subtracter 42 is selected by the changeover switch 43.

This causes, in the parallel converter control section 30, the result of an adjusting calculation at the DC voltage adjusting section 31, which is performed for making the value of the terminal voltage Vc of the smoothing capacitor 4 agree with the specified value Vc* thereof, to be subtracted from the value of the AC voltage Vin. The result of the subtraction is set as the output voltage command value Vrect* of the parallel converter 2, on the basis of which the gate signal PWM1 is produced.

In the series inverter control section 40, the value of the AC voltage Vin is subtracted from the output voltage command value Vout* set at the output voltage command generating section 41; the resulting difference is set as the compensating voltage command value Vocmp*, on the basis of which the gate signal PWM2 is produced.

Therefore, by the parallel converter 2 operating so that the value of the terminal voltage Vc of the smoothing capacitor 4 agrees with the specified value Vc* thereof, the value of the terminal voltage Vc of the smoothing capacitor 4 is maintained at the specified value Vc*. Moreover, by the series inverter 3 operating so as to output the compensating voltage command value Vocmp*, the value of the AC voltage Vin is compensated. As a result, to the output terminals 12, a voltage with a value equivalent to the output voltage command value Vout* is to be applied, which results in the applied voltage to the load 6 made maintained at the output voltage command value Vout*.

Drop in the AC voltage Vin from this state by occurrence of short circuit power failure on the AC power source side is detected by the voltage abnormality detecting section 50 at the time when the AC voltage Vin falls out of the permissible range, by which the input relay 7 is switched to a open state. Along with this, control is carried out so that the specified value "0" is selected by the changeover switch 33. In addition, control is carried out so that the output voltage command value Vout* is selected by the changeover switch 43.

This makes the parallel converter control section 30 operate the parallel converter 2 so that the value of the output voltage thereof becomes the specified value "0". Moreover, the series inverter control section 40 makes the series inverter 3 perform an inverter operation so that the value of the output voltage thereof becomes the output voltage command value Vout*. That is, DC electric power in the energy storing unit 5 is converted to AC electric power to be applied to the output terminals 12. Therefore, to the load 6, a voltage with the output voltage command value Vout* is continuously applied.

On detecting drop in the AC voltage Vin, the input relay 7 is controlled into the open state. However, when the input relay 7 is formed with mechanical contacts, an operation delay occurs until the AC power source 1 becomes actually disconnected from the UPS system 100. In the state where the operation of the input relay 7 is not yet completed, because of occurrence of short circuit in this case, the AC current side of the parallel converter 2 is also brought into the state of being short circuited. However, the operation is made so that the output voltage of the parallel converter 2 becomes "0", namely, so that the voltage on the side connected to the load side in the input relay 7 becomes "0". Thus, no electric potential difference is produced between the AC power source side and the output side of the parallel converter 2. Therefore, no unexpected short circuit current flows between the parallel converter 2 and the AC power source 1. This makes it possible to avoid adverse effects by the power failure on the UPS system itself or equipment connected to the same power system as this, by which reliability thereof can be improved.

### Second Embodiment

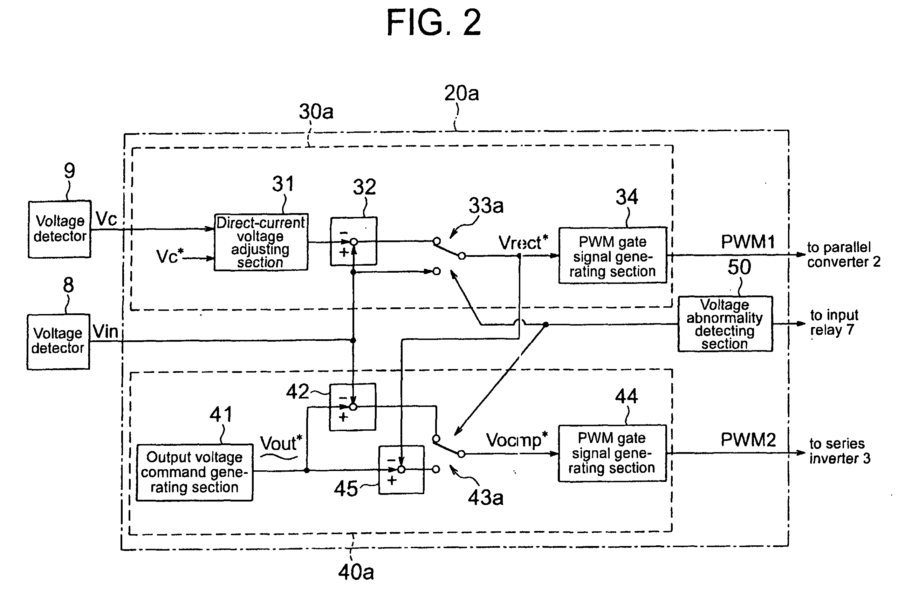

A second embodiment of the invention will be explained with reference to Fig. 2. The second embodiment is similar to the first embodiment differing, however, in the arrangement of the control circuit 20a compared to the control circuit 20 of the first embodiment. Like parts in Figs. 1 and 2 are given like reference numerals and signs with detailed description thereof is omitted.

As shown in Fig. 2, in a parallel converter control section 30a, like in the first embodiment, an adjusting arithmetic operation is carried out in the DC voltage adjusting section 31 so that the value of the terminal voltage Vc of the smoothing capacitor 4 detected by the voltage detector 9 and a specified value Vc* thereof agree with each other. In a subtracter 32, the value of an adjusting voltage calculated at the DC voltage adjusting section 31 is subtracted from the value of the AC voltage Vin.

Either the subtracted value calculated at the subtracter 32 or the value of the AC voltage Vin detected by the voltage detector 8 is selected by a changeover switch 33a. The selected value is set as an output voltage command value Vrect* for the parallel converter 2. On the basis of the output voltage command value Vrect* thus set by the changeover switch 33a, PWM control is carried out at the PWM pulse generating section 34, by which the gate signal PWM 1 is produced for making the semiconductor switch forming the parallel converter 2 perform an on-off operation.

In the series inverter control section 40a, like in the first embodiment, the value of the AC voltage Vin detected by the voltage detector 8 is subtracted by the subtracter 42 from the output voltage command value Vout* set at the output voltage command generating section 41. In the second embodiment, at a subtracter 45, the output voltage command value Vrect* for the parallel converter 2 selected by the changeover switch 33a in the parallel converter control section 30a is subtracted from the output voltage command value Vout* set at the output voltage command generating section 41. Either the subtracted value calculated out at the subtracter 42 or the subtracted value calculated at the subtracter 45 is selected by a changeover switch 43a to provide the selected value as the compensating voltage command value Vocmp*.

On the basis of the compensating voltage command value Vocmp*, PWM control is carried out at the PWM pulse generating section 44 to produce the gate signal PWM 2 for making the semiconductor switches forming the series inverter 3 perform on-off operation.

When the voltage abnormality detecting section 50detects the AC voltage Vin to be within a permissible range, the input relay 7 is controlled to be in the state of conduction. Furthermore, by the changeover switch 33a, the value of the output of the subtracter 32 is set as the output voltage command value Vrect* for the parallel converter 2. Along with this, by the changeover switch 43a, the value of the output of the subtracter 42 is set as the compensating voltage command value Vocmp*. When the AC voltage Vin is out of the permissible range, the input relay 7 is controlled to be in the open state. Furthermore, by the changeover switch 33a, the value of the AC voltage Vin is set as the output voltage command value Vrect* for the parallel converter 2. Moreover, by the changeover switch 43a, the value of the output of the subtracter 45 is set as the compensating voltage command value Vocmp*.

Next, the operation of the second embodiment will be explained.

When the AC voltage Vin is within the permissible range, the input relay 7 is controlled to be in the state of conduction. Moreover, the output of the subtracter 32 is selected by the changeover switch 33a, and the output of the subtracter 42 is selected by the changeover switch 43a. Therefore, the UPS system 100 operates similarly to the system of the first embodiment.

When, for any reason, the AC voltage Vin falls out of the permissible range by drop in the output of the AC power source 1 from this state, the input relay 7 is controlled to be in the open state. Moreover, by the changeover switch 33a, the value of the AC voltage Vin is selected as the output voltage command value Vrect* for the parallel converter 2, and, by the changeover switch 43a, the value of the output of the subtracter 45 is set as the compensating voltage command value Vocmp*. Therefore, in the parallel converter 2, an inverter operation is performed so that the value of the output voltage thereof becomes the value of the AC voltage Vin.

In a state in which the input relay 7 is actually not yet in the open state due to its operation delay, a residual voltage of the AC voltage Vin appears on the load side of the input relay 7. Therefore, the parallel converter 2 is to operate so that its output voltage becomes the residual voltage of the AC voltage Vin.

Thus, no electric potential difference is produced between the output voltage of the parallel converter 2 and the AC voltage Vin. Therefore, the current flowing between the AC power source 1 and the UPS system 100 becomes zero. Hence, even in the case in which the input relay 7 is not yet in the open state, it is possible ensure a condition equivalent to the case in which the AC power source 1 and the UPS system 100 are disconnected.

In particular, even when a short circuit occurs, no unexpected short current flows through the short circuited part, because the parallel converter 2 operates so that no electric potential is produced between the AC voltage Vin and the output voltage of the parallel converter 2. Therefore, it is possible to avoid adverse effects that might otherwise be exerted by an unexpected short circuit current on the UPS system 100 itself or equipment connected to the same power system as this.

The series inverter 3 operates with a value as the compensating voltage command value Vocmp* that is obtained by subtracting the output voltage command value Vrect* for the parallel converter 2 from the output voltage command value Vout*, that is, a value for which the value of the AC voltage Vin is subtracted therefrom. Namely, the series inverter 3 carries out a compensating operation so that the value of the output of the system becomes the output voltage command value Vout* to the output of the parallel inverter 2.

That is, when the value of the AC voltage Vin is within the permissible range, the series inverter 3 carries out a compensating operation to the AC voltage Vin so that the value of the output voltage of the system is maintained at the output voltage command value Vout*, while, when the AC voltage Vin is out of the permissible range, the series inverter 3 carries out a compensating operation to the parallel converter 2 so that the value of the output voltage of the system is maintained at the output voltage command value Vout*.

Therefore, also in the second embodiment, even in the case in which operation delay is caused until the input relay 7 is finally open, the value of the applied voltage to the load 6 can be maintained at the output voltage command value Vout* without any drop in the output voltage of the system. Moreover, realization of this is possible without being affected by the residual voltage of the AC voltage Vin.

Furthermore, it is possible to prevent generation of an unexpected current due to the AC voltage Vin falling out of the permissible range. In addition, the output voltages of the parallel converter 2 and the series converter 3 are provided so that the output voltage command value Vout* is compensated thereby. Therefore, even though the operation of the input relay 7 is completed and the AC power source 1 is isolated from the UPS system, the system is not affected at all.

In the second embodiment, the AC voltage Vin is actually detected and the parallel inverter 2 is controlled so that a voltage equal to the AC voltage Vin is outputted. Thus, the unexpected current can be surely prevented.

In the first and second embodiments, explanations were made about the case in which the parallel converter 2 or the series inverter 3 was formed with a full bridge circuit including switching elements and diodes in inverse-parallel connection. However, the parallel converter 2 or the series inverter 3 is not limited to this, but can be applied even though the parallel converter 2 or the series inverter 3 is formed with a half bridge circuit, for example.

Moreover, in the first and second embodiments, explanations were made about the case in which the invention was applied to a single-phase UPS system. However, the invention is not limited to this, but can be of course applied even to an UPS system of other than single-phase such as a three-phase UPS system.

In each of the embodiments, the input relay 7 corresponds to the cutting out unit, the parallel converter 2 to the parallel power converting unit, the series inverter 3 to the series power converting unit, the smoothing capacitor 4 and the energy storing unit 5 to the electricity storing unit, the voltage detector 8 to the AC voltage detecting unit, and the voltage abnormality detecting section 50 to the short circuit detecting unit and the power failure detecting unit.

As explained above, by the UPS system according to claim 1 of the invention, the system is provided so that, when short circuit power failure, for example, occurs on the AC supplying side, the AC supplying side is isolated from the UPS system side by the cutting out unit, along with this, the parallel power converting unit is made operated so as to make the voltage level of the parallel connected point side become a short circuit voltage level set beforehand, and the series power converting unit is made operated so as to make the value of the AC output at the output end become a specified output value. Therefore, even in the case in which an operation delay has occurred until isolation of the AC power supply side is completed, the value of the AC output at the output end can be maintained at the specified value.

Moreover, by the UPS system according to claim 2 of the invention, the system is provided so that, when power failure is detected, the AC supplying side is isolated by the cutting out unit, along with this, at a time the power failure is detected, the parallel power converting unit is made operated so as to make the voltage of the parallel connected point side become a supplied AC power voltage detected by the AC voltage detecting unit, and the series power converting unit is made to perform an operation for compensating the AC output of the parallel power converting unit so as to make the value of the AC output at the output end become a specified output value. Therefore, even in the case in which an operation delay occurs until completion of isolation of the AC power supply side, the value of the AC output at the output end can be maintained at the specified value. Along with this, flowing of an unexpected current in the uninterruptible power supply unit can be avoided.

## Claims

1. An uninterruptible power supply system, comprising:
a disconnecting unit (7), inserted between an input end (11) from which AC power is supplied and an output end (12) connectable to a load (6), for disconnecting the AC power supplying side;
a parallel power converting unit (2) connected between the disconnecting unit (7) and the output end (12) in parallel to the input end (11);
a series power converting unit (3) inserted in series between a parallel connected point of the parallel power converting unit (2) and the output end (12); and
an electricity storing unit (4, 5) permitting electric power to be interchanged between the parallel power converting unit (2) and series power converting unit (3), wherein
when supply of the AC power is sound, the series power converting unit (3) is caused to carry out an operation for compensating the supply of the AC power with the electricity storing unit (4, 5) taken as an electric power source so that the value of an AC power output at the output end (12) becomes a specified output value, and the parallel power converting unit (2) is caused to carry out charging and discharging of the electricity storing unit (4, 5) so that the amount of stored electricity in the electricity storing unit (4, 5) becomes a specified amount,
the uninterruptible power supply system being **characterized by** comprising:
a power failure detecting unit (50) for detecting a power failure; wherein
when the power failure detecting unit (50) detects a power failure, the disconnecting unit (7) is caused to disconnect the AC power supplying side, and along with this, the series power converting unit (3) is caused to operate with the electricity storing unit (4, 5) as a power source for outputting the whole voltage of the alternating-current output so that the value of the AC power at the output end (12) becomes the specified output value.

2. An uninterruptible power supply system, comprising:
a disconnecting unit (7), inserted between an input end (11) from which AC power is supplied and an output end (12) connectable to a load (6), for disconnecting the AC power supplying side;
a parallel power converting unit (2) connected between the disconnecting unit (7) and the output end (12) in parallel to the input end (11);
a series power converting unit (3) inserted in series between a parallel connected point of the parallel power converting unit (2) and the output end (12); and
an electricity storing unit (4, 5) permitting electric power to be interchanged between the parallel power converting unit (2) and series power converting unit (3), wherein
when supply of the AC power is sound, the series power converting unit (3) is caused to carry out an operation for compensating the supply of the AC power with the electricity storing unit (4, 5) taken as an electric power source so that the value of an AC power output at the output end (12) becomes a specified output value, and the parallel power converting unit (2) is caused to carry out charging and discharging of the electricity storing unit (4, 5) so that the amount of stored electricity in the electricity storing unit (4, 5) becomes a specified amount,
the uninterruptible power supply system being **characterized by** comprising:
a power failure detecting unit (50) for detecting a power failure; and
an AC voltage detecting unit (8) for detecting the voltage (Vin) of the supplied AC power, wherein
when the power failure detecting unit (50) detects a power failure, the disconnecting unit (7) is caused to disconnect the AC power supplying side, along with this, the parallel power converting unit (2) is caused to operate so that the voltage of the parallel connected point side becomes the voltage (Vin) detected by the AC voltage detecting unit (8), and the series power converting unit (3) is caused to operate with the electricity storing unit (4, 5) as a power source for compensating the output voltage of the parallel power converting unit (2) so that the value of the AC power at the output end (12) becomes the specified output value.
